(19) **Europäisches Patentamt**
**European Patent Office**
**Office européen des brevets**

(11) **EP 4 676 011 A1**

(12) **EUROPEAN PATENT APPLICATION**
published in accordance with Art. 153(4) EPC

(43) Date of publication:
**07.01.2026 Bulletin 2026/02**

(21) Application number: **24773991.5**

(22) Date of filing: **14.03.2024**

(51) International Patent Classification (IPC):
***H04L 69/323*** (2022.01)

(52) Cooperative Patent Classification (CPC):
**H04L 69/323; H04W 80/08; H04W 80/12**

(86) International application number:
**PCT/CN2024/081581**

(87) International publication number:
**WO 2024/193425 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.03.2023 CN 202310320503**

(71) Applicant: **Huawei Technologies Co., Ltd.
Shenzhen, Guangdong 518129 (CN)**

(72) Inventors:
• **GONG, Bo
Shenzhen, Guangdong 518129 (CN)**

• **GAN, Ming
Shenzhen, Guangdong 518129 (CN)**
• **LIU, Chenchen
Shenzhen, Guangdong 518129 (CN)**
• **HUA, Meng
Shenzhen, Guangdong 518129 (CN)**
• **LI, Feng
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **PPDU-BASED COMMUNICATION METHOD AND APPARATUS**

(57) A communication method and apparatus based on a PPDU are provided, are applied to a wireless local area network system that supports 802.11 series protocols such as next-generation Wi-Fi protocols of IEEE 802.11ax like 802.11be, Wi-Fi 7, or EHT, and next generation of 802.11be or Wi-Fi 8, and may be further applied to a UWB-based wireless personal area network system, a sensing (sensing) system, and the like. A first communication apparatus generates a PPDU, and sends the PPDU. Correspondingly, a second communication apparatus receives the PPDU, and processes the PPDU based on an index value of a pilot subcarrier. The PPDU includes the pilot subcarrier and a data subcarrier, and a signal modulus value of the pilot subcarrier is greater than a signal modulus value of the data subcarrier. This effectively improves demodulation accuracy of the second communication apparatus.

FIG. 2

**Description**

This application claims priority to Chinese Patent Application No. 202310320503.6, filed with the China National Intellectual Property Administration on March 23, 2023 and entitled "COMMUNICATION METHOD AND APPARATUS BASED ON PPDU", which is incorporated herein by reference in its entirety.

**TECHNICAL FIELD**

This application relates to the field of communication technologies, and in particular, to a communication method and apparatus based on a physical layer (physical, PHY) protocol data unit (PHY protocol data unit, PPDU).

**BACKGROUND**

From 802.11a/g to 802.11n, 802.11ac, 802.11ax, 802.11be, and the like, a wireless local area network (wireless local area network, WLAN) uses a frequency band from 2.4 GHz to 2.4 GHz/5 GHz, and then to 2.4 GHz/5 GHz/6 GHz, and supports a bandwidth expanded from 20 MHz to 320 MHz. The wireless local area network has continuously increasing spectral efficiency and throughput. A next-generation WLAN technology further improves a physical layer capability of the wireless local area network, and introduces a millimeter-wave frequency band like 45 GHz/60 GHz.

As the millimeter-wave frequency band continuously develops, a physical layer signal transmitted on the millimeter-wave frequency band becomes particularly important. For example, a physical layer signal sent by a transmit end affects demodulation accuracy of a receive end. Therefore, demodulation accuracy of the receive end needs to be further improved.

**SUMMARY**

Embodiments of this application provide a communication method and apparatus based on a PPDU, to effectively improve demodulation accuracy of a second communication apparatus.

According to a first aspect, an embodiment of this application provides a communication method based on a PPDU, the method is applied to a first communication apparatus, and the method includes: generating the PPDU; and sending the PPDU, where the PPDU includes a pilot subcarrier and a data subcarrier, a signal modulus value of the pilot subcarrier is greater than a signal modulus value of the data subcarrier, and the pilot subcarrier is used for phase tracking.

In this embodiment of this application, the signal modulus value of the pilot subcarrier in the PPDU is increased, so that the signal modulus value of the pilot subcarrier is greater than the signal modulus value of the data subcarrier. This effectively increases pilot energy.

Therefore, when a second communication apparatus processes a pilot signal, accuracy of correcting a frequency offset and/or a phase offset by the second communication apparatus can be effectively improved, and demodulation accuracy of the second communication apparatus is improved. In addition, when a total transmit power remains unchanged, the signal modulus value of the pilot subcarrier is increased, so that a packet error rate can be effectively reduced, and a received signal-to-noise ratio of the second communication apparatus can be improved. That the total transmit power remains unchanged may be understood as follows: The signal modulus value of the pilot subcarrier in the PPDU sent by the first communication apparatus is equal to the signal modulus value of the data subcarrier, and the signal modulus value of the pilot subcarrier in the PPDU sent by the first communication apparatus is greater than the signal modulus value of the data subcarrier.

According to a second aspect, an embodiment of this application provides a communication method based on a PPDU, the method is applied to a second communication apparatus, and the method includes: receiving the PPDU, where the PPDU includes a pilot subcarrier and a data subcarrier, a signal modulus value of the pilot subcarrier is greater than a signal modulus value of the data subcarrier, and the pilot subcarrier is used for phase tracking; and processing the PPDU based on an index value of the pilot subcarrier.

With reference to the second aspect, in a possible implementation, the processing the PPDU based on the index value of the pilot subcarrier includes: obtaining a pilot signal in the PPDU based on the index value of the pilot subcarrier; and performing phase offset estimation and/or compensation based on the pilot signal, or performing frequency offset estimation and/or compensation based on the pilot signal.

With reference to the first aspect or the second aspect, in a possible implementation, that the pilot subcarrier is used for phase tracking includes at least one of the following: the pilot subcarrier is used for phase offset estimation; the pilot subcarrier is used for phase offset compensation; the pilot subcarrier is used for frequency offset estimation; or the pilot subcarrier is used for frequency offset compensation.

With reference to the first aspect or the second aspect, in a possible implementation, the signal modulus value of the pilot subcarrier is $\sqrt{2}$, and the signal modulus value of the data subcarrier is 1.

In this embodiment of this application, the signal modulus value of the pilot subcarrier may be relative to the signal modulus value of the data subcarrier. For example, if the signal modulus value of the data subcarrier is 1, the signal modulus value of the pilot subcarrier may be $\sqrt{2}$. For another example, if the signal modulus value of the data subcarrier is 2, the signal modulus value of the pilot subcarrier may be $2\sqrt{2}$.

With reference to the first aspect or the second aspect, in a possible implementation, a pilot value (pilot value) of the pilot subcarrier is $+\sqrt{2}$ or $-\sqrt{2}$; or a pilot value of the pilot subcarrier is at least one of the following: 1 + 1i, 1 - 1i, -1 + 1i, or -1 - 1i.

In this embodiment of this application, the pilot value of the pilot subcarrier may also be referred to as a value of the pilot subcarrier, a value carried in the pilot subcarrier, or the like.

With reference to the first aspect or the second aspect, in a possible implementation, when a discrete Fourier transform (discrete Fourier transform, DFT) size (DFT size) of the PPDU is 64, the index value of the pilot subcarriers includes [-21, -7, 7, 21]; or when the DFT size of the PPDU is 256, the index value of the pilot subcarrier includes [-116, -90, -48, -22, 22, 48, 90, 116] or [-103, -75, -39, -11, 11, 39, 75, 103]; or when the DFT size of the PPDU is 128, the index value of the pilot subcarrier includes [-53, -25, -11, 11, 25, 53]; or when the DFT size of the PPDU is 512, the index value of the pilot subcarrier includes [-238, -212, -170, -144, -104, -78, -36, -10, 10, 36, 78, 104, 144, 170, 212, 238] or [-231, -203, -167, -139, -117, -89, -53, -25, 25, 53, 89, 117, 139, 167, 203, 231]; or when the DFT size of the PPDU is 1024, the index value of the pilot subcarrier includes [-468, -400, -334, -266, -226, -158, -92, -24, 24, 92, 158, 226, 266, 334, 400, 468] or [-468, -400, -334, -266, -220, -152, -86, -18, 18, 86, 152, 220, 266, 334, 400, 468].

In this embodiment of this application, the index value of the pilot subcarrier in the PPDU sent by the first communication apparatus is the same as the index value of the pilot subcarrier in the PPDU at a low frequency. Therefore, it can be ensured that a data signal processing process of the high frequency signal is approximately consistent with a data signal processing process of the low frequency signal, and complexity of a baseband chip is reduced. For example, the first communication apparatus may directly send the high frequency signal obtained by increasing the subcarrier spacing of the low frequency signal. For example, a quantity of pilot subcarriers used by the high frequency signal is equal to a quantity of pilot subcarriers used by the low frequency signal, and there is a mapping relationship between a location of the pilot subcarrier used by the high frequency signal and a location of the pilot subcarrier used by the low frequency signal. A quantity of guard subcarriers used by the high frequency signal is equal to a quantity of guard subcarriers used by the low frequency signal, and there is a mapping relationship between a location of the guard subcarrier used by the high frequency signal and a location of the guard subcarrier used by the low frequency signal. Therefore, a manner of sending the high frequency signal is closer to a manner of sending the low frequency signal, so that complexity of a baseband chip whose designing is compatible with a high frequency band and a low frequency band is reduced.

In this embodiment of this application, the DFT size may include a fast Fourier transform (fast Fourier transform, FFT) size (FFT size).

With reference to the first aspect or the second aspect, in a possible implementation, the sending the PPDU includes: sending the PPDU on a high frequency channel, where a subcarrier spacing on the high frequency channel is N times 312.5 kHz or 78.125 kHz, and N is an integer.

With reference to the first aspect or the second aspect, in a possible implementation, a bandwidth of the high frequency channel is any one of the following: 160 MHz, 320 MHz, 640 MHz, 1280 MHz, or 2560 MHz.

With reference to the first aspect or the second aspect, in a possible implementation, a carrier frequency range of the high frequency channel is 42.5 GHz to 71 GHz.

According to a third aspect, an embodiment of this application provides a communication apparatus, configured to perform the method in any one of the first aspect or the possible implementations of the first aspect. The communication apparatus includes units that perform the method in any one of the first aspect or the possible implementations of the first aspect.

According to a fourth aspect, an embodiment of this application provides a communication apparatus, configured to perform the method in any one of the second aspect or the possible implementations of the second aspect. The communication apparatus includes units that perform the method in any one of the second aspect or the possible implementations of the second aspect.

In an example, in the third aspect or the fourth aspect, the communication apparatus may include a transceiver unit and a processing unit.

In another example, in the third aspect, the communication apparatus may include a generation unit and a sending unit. In the fourth aspect, the communication apparatus may include a receiving unit and a processing unit.

According to a fifth aspect, an embodiment of this application provides a communication apparatus. The communication apparatus includes a processor, configured to perform the method according to any one of the first aspect or the possible implementations of the first aspect. Alternatively, the processor is configured to execute a program stored in a memory. When the program is executed, the method according to any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together. For example, the communication apparatus may be an AP, a STA, or the like, or the communication apparatus may be a chip.

In a possible implementation, the communication apparatus further includes a transceiver. The transceiver is configured to receive a signal and/or send a signal. For example, the transceiver may be configured to send a PPDU or the like.

According to a sixth aspect, an embodiment of this application provides a communication apparatus. The communication apparatus includes a processor, configured to perform the method according to any one of the second aspect or the possible implementations of the second aspect. Alternatively, the processor is configured to execute a program stored in a memory. When the program is executed, the method according to any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together. For example, the communication apparatus may be an AP, a STA, or the like, or the communication apparatus may be a chip.

In a possible implementation, the communication apparatus further includes a transceiver. The transceiver is configured to receive a signal and/or send a signal. For example, the transceiver may be configured to receive a PPDU.

According to a seventh aspect, an embodiment of this application provides a communication apparatus. The communication apparatus includes a logic circuit and an interface, and the logic circuit is coupled to the interface. The logic circuit is configured to generate a PPDU. The interface is configured to output the PPDU.

Optionally, the communication apparatus further includes a memory. The memory is configured to store an index value of each subcarrier and the like.

According to an eighth aspect, an embodiment of this application provides a communication apparatus. The communication apparatus includes a logic circuit and an interface. The logic circuit is coupled to the interface. The interface is configured to input a PPDU. The logic circuit is configured to process the PPDU.

Optionally, the communication apparatus further includes a memory. The memory is configured to store an index value of each subcarrier and the like.

According to a ninth aspect, an embodiment of this application provides a computer-readable storage medium. The computer-readable storage medium is configured to store a computer program. When the computer program is run on a computer, the method according to any one of the first aspect or the possible implementations of the first aspect is enabled to be performed.

According to a tenth aspect, an embodiment of this application provides a computer-readable storage medium. The computer-readable storage medium is configured to store a computer program. When the computer program is run on a computer, the method according to any one of the second aspect or the possible implementations of the second aspect is enabled to be performed.

According to an eleventh aspect, an embodiment of this application provides a computer program product. The computer program product includes a computer program or computer code (which may also be referred to as instructions). When the computer program or the computer code is run on a computer, the method according to any one of the first aspect or the possible implementations of the first aspect is performed.

According to a twelfth aspect, an embodiment of this application provides a computer program product. The computer program product includes a computer program or computer code (which may also be referred to as instructions). When the computer program or the computer code is run on a computer, the method according to any one of the second aspect or the possible implementations of the second aspect is performed.

According to a thirteenth aspect, an embodiment of this application provides a computer program. When the computer program is run on a computer, the method according to any one of the first aspect or the possible implementations of the first aspect is performed.

According to a fourteenth aspect, an embodiment of this application provides a computer program. When the computer program is run on a computer, the method according to any one of the second aspect or the possible implementations of the second aspect is performed.

According to a fifteenth aspect, an embodiment of this application provides a wireless communication system. The wireless communication system includes a first communication apparatus and a second communication apparatus, the first communication apparatus is configured to perform the method in any one of the first aspect or the possible implementations of the first aspect, and the second communication apparatus is configured to perform the method according to any one of the second aspect or the possible implementations of the second aspect.

**BRIEF DESCRIPTION OF DRAWINGS**

FIG. 1 is a diagram of a communication system according to an embodiment of this application;
FIG. 2 is a schematic flowchart of a communication method based on a PPDU according to an embodiment of this application;
FIG. 3a is a diagram of a process in which a transmit end generates a PPDU according to an embodiment of this application;

FIG. 3b is a diagram of a process in which a receive end of processes a PPDU according to an embodiment of this application;

FIG. 3c is a diagram of a structure of a PPDU according to an embodiment of this application;

FIG. 3d is a diagram of a structure of a PPDU according to an embodiment of this application;

FIG. 4 is a diagram of a simulation result according to an embodiment of this application;

FIG. 5 is a diagram of a structure of a communication apparatus according to an embodiment of this application;

FIG. 6 is a diagram of a structure of a communication apparatus according to an embodiment of this application; and

FIG. 7 is a diagram of a structure of a communication apparatus according to an embodiment of this application.

## DESCRIPTION OF EMBODIMENTS

For ease of understanding technical solutions this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

The following describes a communication system in embodiments of this application.

The technical solutions provided in embodiments of this application may be applied to a WLAN system, for example, Wi-Fi. For example, the method provided in embodiments of this application is applicable to the IEEE 802.11 series protocols, for example, the 802.11a/b/g protocol (for example, the 802.11 bf protocol), the 802.11n protocol, the 802.11ac protocol, the 802.11ax protocol, the 802.11be protocol, and the 802.11bn protocol or a next-generation protocol. Details are not listed one by one. The technical solutions provided in embodiments of this application may be further applied to a wireless personal area network (wireless personal area network, WPAN) based on an ultra wideband (ultra wideband, UWB) technology. For example, the methods provided in embodiments of this application may be applied to IEEE 802.15 series protocols, for example, the 802.15.4a protocol, the 802.15.4z protocol, the 802.15.4ab protocol, or a future generation UWB WPAN protocol. Examples are not exhaustively listed. The technical solutions provided in embodiments of this application may be further applied to the following communication system, for example, an internet of things (internet of things, IoT) system, a vehicle to X (vehicle to X, V2X) system, or a narrowband internet of things (narrow band internet of things, NB-IoT) system, is applied to a device in the vehicle to X, an internet of things node, a sensor, and the like in the internet of things (internet of things, IoT), a smart camera, a smart remote control, a smart water meter, a smart electricity meter in a smart home, a sensor in a smart city, and the like, or may be further applicable to a long term evolution (long term evolution, LTE) system, a 5th-generation (5th-generation, 5G) communication system, a new communication system emerging in future communication development, and the like.

The WLAN system can provide high-rate and low-latency transmission. With continuous evolution of WLAN application scenarios, the WLAN system is to be applied to more scenarios or industries, for example, the internet of things industry, the vehicle to X industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the internet of things, an entertainment terminal (for example, a wearable device like augmented reality (augmented reality, AR) or virtual reality (virtual reality, VR)), a smart device (for example, a printer, a projector, a loudspeaker, or a speaker) in a smart office, a vehicle to X device in the Internet of Vehicles, an infrastructure (for example, a vending machine, a self-service navigation console in a shopping mall or supermarket, a self-service cashier, or a self-service ordering machine) in a daily life scenario, a device in a large sports and music venue, or the like. For example, the access point and the station each may be a device used in the vehicle to X, an internet of things node, a sensor, or the like in the internet of things, a smart camera, a smart remote control, and a smart water/electricity meter in a smart home, or a sensor in a smart city.

Although embodiments of this application mainly use a WLAN as an example, especially a network applied to IEEE 802.11 series standards, for example, a system supporting Wi-Fi 7 that may also be referred to as extremely high throughput (extremely high throughput, EHT), and for another example, a system supporting Wi-Fi 8 that may also be referred to as ultra high reliability (ultra high reliability, UHR) or ultra high reliability and throughput (ultra high reliability and throughput, UHRT), a person skilled in the art easily understands that aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (WAN), or other networks known or developed in the future.

The methods provided in embodiments of this application may be implemented by a communication apparatus in a wireless communication system. For example, the communication apparatus may be an access point (access point, AP) or a station (station, STA).

The access point is an apparatus having a wireless communication function, supports communication or sensing by using a WLAN protocol, has a function of communicating or sensing with another device (for example, a station or another access point) in a WLAN network, and certainly, may further have a function of communicating or sensing with another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having the wireless communication function may be an entire device, or may be a chip or a processing system installed in the entire device. The device in which the chip or the processing system is installed may implement the method and a function in embodiments of this application under control of the chip or the processing system. The AP in embodiments of this application is an apparatus that provides a service for the STA, and may support the 802.11 series protocols, subsequent protocols, or the like. For example, the access point may be an access point for a terminal (for example, a mobile phone) to access a wired (or wireless) network, and is mainly deployed in a home, a building, and a park. A typical coverage radius is tens of meters to hundreds of meters. It is clear that the access point may alternatively be deployed outdoors. For another example, the AP may be a communication entity, for example, a communication server, a router, a switch, or a bridge, or the AP may include various forms of macro base stations, micro base stations, relay stations, and the like. It is clear that the AP may alternatively be a chip or a processing system in these devices in various forms, to implement the method and the function in embodiments of this application.

The station is an apparatus with a wireless communication function, supports communication or sensing by using the WLAN protocol, and has a capability of communicating with or sensing another station or access point in the WLAN network. In a WLAN system, the station may be referred to as a non-access point station (non-access point station, non-AP STA). For example, the STA is any user communication device that allows a user to communicate with or sense an AP and further communicate with a WLAN. The apparatus having the wireless communication function may be an entire device, or may be a chip or processing system installed in the entire device. The device in which the chip or the processing system is installed may implement the method and the function in embodiments of this application under control of the chip or the processing system. For example, the station may be a wireless communication chip, a wireless sensor, or a wireless communication terminal, and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function.

For example, a communication system to which the method provided in embodiments of this application may be applied may include an access point and a station. For example, this application is applicable to a scenario in which an AP communicates with or senses a STA in the WLAN. Optionally, the AP may communicate with or sense a single STA, or the AP may simultaneously communicate with or sense a plurality of STAs. Specifically, communication or sensing between the AP and the plurality of STAs may be classified into downlink transmission in which the AP simultaneously sends signals to the plurality of STAs and uplink transmission in which the plurality of STAs send signals to the AP. The AP and the STA may support a WLAN communication protocol. The communication protocol may include IEEE 802.11 series protocols, for example, is applicable to a 802.11n/802.11ac/802.11ax/802.11be/802.11bn standard, and certainly is also applicable to a standard later than the 802.11bn standard.

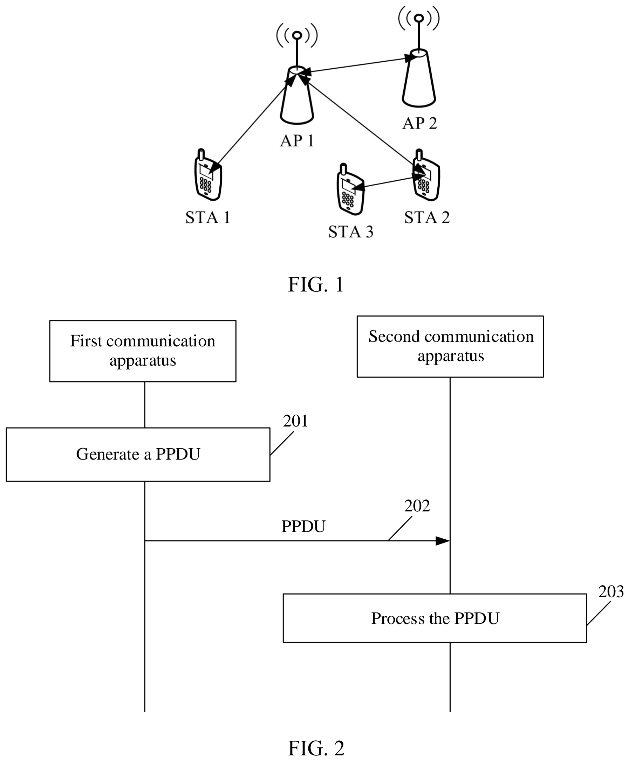

FIG. 1 is a diagram of an architecture of a communication system according to an embodiment of this application. The communication system may include one or more APs and one or more STAs. FIG. 1 shows two access points: an AP 1 and an AP 2, and three stations: a STA 1, a STA 2, and a STA 3. It may be understood that the one or more APs may communicate with the one or more STAs. Certainly, an AP may communicate with an AP, and a STA may communicate with a STA. It may be understood that, in FIG. 1, an example in which the STA is a mobile phone and the AP is a router is used, and this does not mean that a type of the AP and a type of the STA in this application are limited. In addition, it may be understood that FIG. 1 shows only two APs and three STAs as an example. However, there may be more or fewer APs or STAs. This is not limited in this application.

In an example, a first communication apparatus and a second communication apparatus may be Wi-Fi chips disposed in different Wi-Fi devices. In another example, the first communication apparatus may be an AP, and the second communication apparatus may be a STA. In still another example, both the first communication apparatus and the second communication apparatus may be STAs (or APs). In still another example, the first communication apparatus may be a STA, and the second communication apparatus may be an AP. In still another example, the first communication apparatus and the second communication apparatus may be multi-link devices (multi-link device, MLD), or the like. Examples are not listed one by one in embodiments of this application. For example, when the first communication apparatus and the second communication apparatus are multi-link devices, a link on which the first communication apparatus sends a PPDU may be a high frequency link. In this case, an AP in the multi-link device may send the PPDU, or a STA in the multi-link device may send the PPDU.

It may be understood that, in embodiments of this application, the method provided in this embodiment of this application is described by using two sides: the first communication apparatus and the second communication apparatus. However, in a process in which the first communication apparatus and the second communication apparatus transmit a PPDU, there may be another apparatus, for example, a PPDU that is between the first communication apparatus and the second communication apparatus and forwarded by using a forwarding apparatus. An apparatus other than the first communication apparatus and the second communication apparatus is not limited in embodiments of this application.

With development of a WLAN protocol (for example, an 802.11 series protocol), the WLAN protocol supports an increasingly large bandwidth (for example, from 20 M to 320 M), and supports an increasingly high frequency band, and spectral efficiency and a throughput are continuously improved.

Currently, a manner of sending a high frequency band physical layer signal is considered. A high frequency band physical layer signal obtained by increasing a subcarrier spacing of a physical layer signal of a 802.11n/802.11ac/802.11ax/802.11be protocol by an integer multiple is directly sent. The sending manner can ensure that digital signal processing processes of a high frequency signal and a low frequency signal are nearly consistent (for example, clocks are different). For a next-generation WLAN protocol that supports both a high frequency band and a low frequency band, the sending manner is very friendly in chip design and implementation.

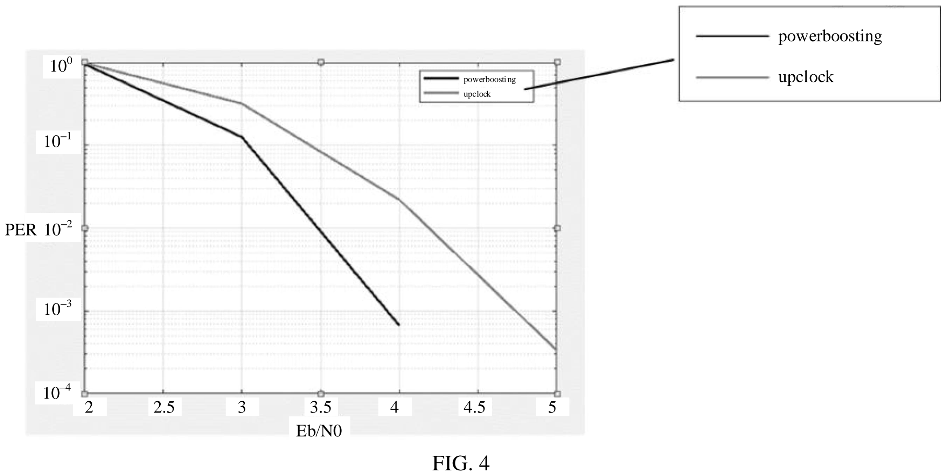

However, when a carrier spacing of a low frequency signal in the 802.11n/802.11ac/802.11ax/802.11be protocol is extended and the low frequency signal is transmitted on a high frequency band (for example, a 45 G/60 G millimeter band), to be specific, a signal modulus value of a pilot subcarrier is equal to a signal modulus value of a data subcarrier, because a channel environment, interference strength, and the like of a high frequency signal are different from those of the low frequency signal, insufficient pilot energy causes a high packet error rate. In addition, it can also be learned from a simulation result that a high packet error rate occurs when a carrier spacing of a low frequency signal is expanded and the low frequency signal is directly transmitted on a high frequency band (as shown in a simulation diagram in FIG. 4).

In view of this, this embodiment of this application provides a communication method and apparatus based on a PPDU, to effectively avoid a problem of insufficient pilot energy and increase pilot energy. In this way, when a second communication apparatus processes a pilot, accuracy of correcting a frequency offset and/or a phase offset by the second communication apparatus can be improved, and demodulation accuracy of the second communication apparatus is improved.

A low frequency signal in this embodiment of this application may be understood as a signal sent through a low frequency channel, and a high frequency signal may be understood as a signal sent through a high frequency channel. Alternatively, the low frequency signal in this embodiment of this application may be understood as a signal generated based on a low frequency band protocol, and the high frequency signal may be understood as a signal generated based on a high frequency band protocol. For example, a bandwidth of the low frequency channel may be any one of the following: 20 MHz, 40 MHz, 80 MHz, 160 MHz, and 320 MHz, and a carrier frequency range of the low frequency channel may be less than 7 GHz (sub-7 GHz). For example, a bandwidth of the high frequency channel may be any one of the following: 160 MHz, 320 MHz, 640 MHz, 1280 MHz and 2560 MHz, and a carrier frequency range of the high frequency channel may be 42.5 GHz to 71 GHz or greater than 45 GHz (super 45 GHz). For example, the low frequency band protocol may include a 802.11, 802.11b, 802.11a, 802.11g, 802.11n, 802.11ac, 802.11ax, 802.11be protocol, and the like, which are not listed one by one herein. For example, the high frequency band protocol may include a 802.11aj, 802.11ay protocol, and the like, which are not listed one by one herein.

FIG. 2 is a schematic flowchart of a communication method based on a PPDU according to an embodiment of this application. For a first communication apparatus and a second communication apparatus in this method, refer to related descriptions in FIG. 1. As shown in FIG. 2, the method includes the following steps.

201: The first communication apparatus generates the PPDU.

For example, the first communication apparatus may generate an OFDM symbol based on a subcarrier on a high frequency channel, and then generate the PPDU based on a plurality of OFDM symbols. For example, when generating the PPDU, the first communication apparatus may first obtain a digital signal, and then convert the digital signal into an analog signal by using a digital-to-analog converter (digital-to-analog converter, DAC). For example, a clock of the DAC may be determined based on a bandwidth, and a subcarrier spacing is determined based on the bandwidth in combination with an inverse discrete Fourier transform (inverse discrete Fourier transform, IDFT) size selected for the digital signal.

Orthogonal frequency division multiplexing (orthogonal frequency division multiplexing, OFDM) is a multi-carrier transmission technology. In this technology, a large quantity of adjacent orthogonal subcarriers may be used, and each subcarrier may be modulated by using a modulation technology. Therefore, a high-rate transmission capability can be obtained by using the orthogonal frequency division multiplexing technology, and frequency selective fading (frequency selective fading) can be effectively resisted. A signal obtained based on the OFDM technology presents a series of OFDM symbols in time domain. In a WLAN communication protocol, the OFDM symbol may include at least one of the following: a pilot subcarrier (pilot subcarrier), a data subcarrier (data subcarrier), a guard subcarrier, or a direct current subcarrier. For example, the OFDM symbol may include the pilot subcarrier, the data subcarrier, the guard subcarrier, and the direct current subcarrier. For example, the guard subcarrier and the direct current subcarrier may carry no signal, or it may be considered that values of signals carried on the guard subcarrier and the direct current subcarrier are 0. The pilot subcarrier is a subcarrier that carries a pilot in an OFDM symbol, and the data subcarrier is a subcarrier for placing or carrying data. Alternatively, it may be considered that the data subcarrier is used to carry load information, and the pilot subcarrier is used to carry a pilot signal. In a communication system, the pilot subcarrier may be used to help detect and correct a subcarrier phase offset (or used for residual frequency offset and phase noise estimation), thereby improving accuracy of parsing the data subcarrier. Based on the function of the pilot subcarrier, a signal modulus value of the pilot subcarrier may affect accuracy of frequency offset correction or phase offset correction performed by the second communication apparatus, and then affect a bit error rate of a received signal or a required received signal-to-noise ratio of the second communication apparatus. The signal modulus value of the pilot subcarrier may also be referred to as a modulus value of a signal carried on the pilot subcarrier, a signal modulus value of a pilot value of the pilot subcarrier, or the like. Examples are not listed one by one.

For example, in frequency domain, the first communication apparatus may perform channel coding and digital modulation (for example, by using a quadrature amplitude modulation (quadrature amplitude modulation, QAM) technology), frequency domain mapping, serial-to-parallel conversion, inverse discrete Fourier transform (inverse discrete Fourier transform, IDFT), cyclic prefix insertion and windowing, and parallel-to-serial conversion on an information bit, to obtain the OFDM symbol. Then, the digital signal is converted into an analog signal by using a digital-to-analog converter. When the first communication apparatus performs OFDM modulation, an object modulated by the first communication apparatus may be content obtained after another operation is performed on an information bit stream obtained by the first communication apparatus, for example, a quadrature amplitude modulation (quadrature amplitude modulation, QAM) symbol or a binary phase shift keying (binary phase shift keying, BPSK) modulation symbol. Examples are not listed one by one herein. The information bits shown herein may be understood as being obtained based on at least one of a sequence carried in a short training field (short training field, STF), a sequence carried in a long training field (long training field, LTF), signaling information, or data source information.

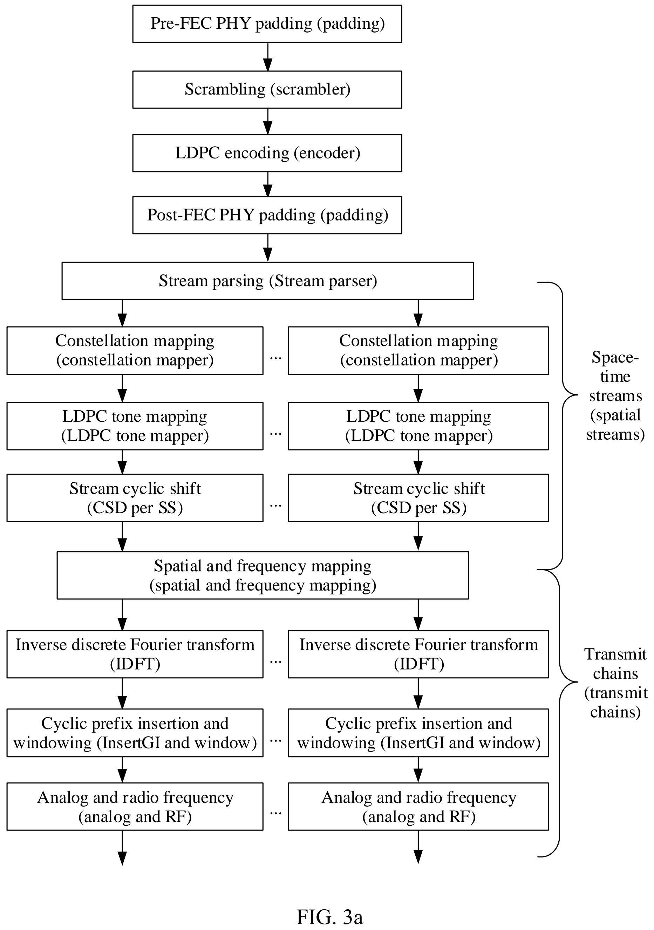

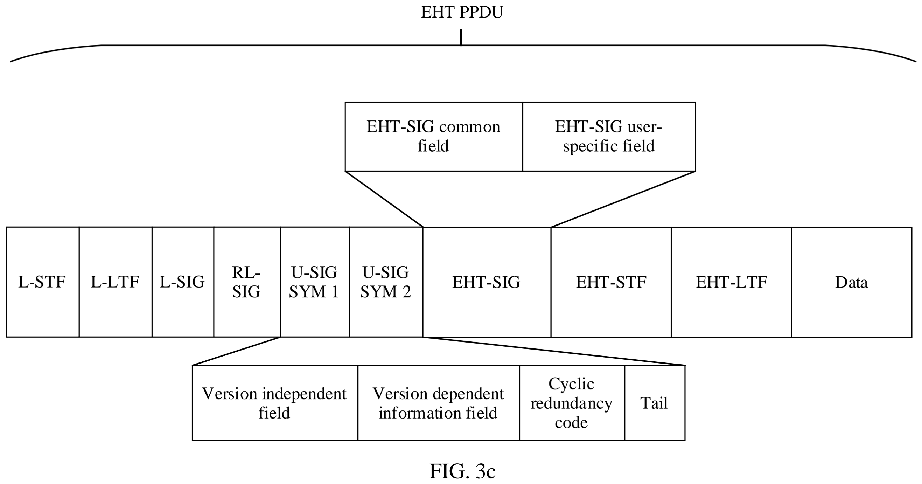

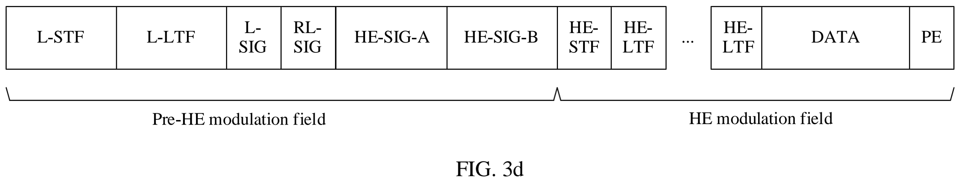

In an example, for a process in which the first communication apparatus generates the PPDU, refer to the following method shown in FIG. 3a. The method shown in FIG. 3a includes a process of generating an OFDM symbol. A plurality of OFDM symbols may form a signal field. The signal field may include a SIG field, an STF field, an LTF field, a data (data) field, and the like. A series of signal fields form the PPDU. FIG. 3c is a diagram of a structure of a PPDU according to an embodiment of this application. FIG. 3c shows a frame structure of an extremely high throughput (extremely high throughput, EHT) PPDU that may be used in the 802.11be protocol. The EHT PPDU may include three parts: a legacy preamble (legacy preamble, L-preamble), an extremely high throughput preamble (extremely high throughput preamble, EHT-preamble), and a physical layer convergence protocol service data unit (physical layer convergence protocol service data unit, PSDU). The legacy preamble part includes an L-STF field, an L-LTF field, and an L-SIG field. The EHT preamble part includes an RL-SIG field and a universal field (universal SIG, U-SIG) field, an extremely high throughput signaling (EHT-SIG) field, an extremely high throughput short training (extremely high throughput short training field, EHT-STF) field, and an extremely high throughput long training (extremely high throughput long training field, EHT-LTF) field. The PSDU part includes a field like a data (data) field. The U-SIG field occupies two OFDM symbols, for example, U-SIG SYM 1 and U-SIG SYM 1 shown in FIG. 3c. FIG. 3d is a diagram of a structure of another PPDU according to an embodiment of this application. FIG. 3d shows a frame structure of a high efficiency (High Efficiency, HE) PPDU that may be used in the 802.11ax protocol. A legacy preamble (for example, an L-STF or an L-LTF), legacy signaling (for example, an L-SIG or an RL-SIG), a high efficiency throughput signaling field A (high efficiency signal field A, HE-SIG-A), and a high efficiency throughput signaling field B (high efficiency signal field B, HE-SIG-B) in a data frame are referred to as pre-HE fields. In addition, a high efficiency short training field (high efficiency short training field, HE-STF), a high efficiency long training field (high efficiency long training field, HE-LTF), and a data (data) field are referred to as HE fields. For specific descriptions of the PPDU, refer to a related protocol. Examples are not listed one by one in this embodiment of this application.

The pilot subcarrier in this embodiment of this application may be used for phase tracking. For example, the pilot subcarrier may be used for phase offset estimation; or the pilot subcarrier is used for phase offset compensation; or the pilot subcarrier is used for frequency offset estimation; or the pilot subcarrier is used for frequency offset compensation. It may be understood that, when the pilot subcarrier is described in the protocol, the function of the pilot subcarrier may be described, or the function of the pilot subcarrier may not be described.

202: The first communication apparatus sends the PPDU, and correspondingly, the second communication apparatus receives the PPDU.

In this embodiment of this application, the PPDU includes a pilot subcarrier and a data subcarrier, and a signal modulus value of the pilot subcarrier is greater than a signal modulus value of the data subcarrier. The signal modulus value of the pilot subcarrier may be determined based on a pilot value of the pilot subcarrier. For example, the first communication apparatus may send a PPDU on a high frequency channel. Therefore, the PPDU may be referred to as a high frequency signal. The pilot value of the pilot subcarrier may also be referred to as a value of the pilot subcarrier, a value carried in the pilot subcarrier, or the like. Examples are not listed one by one in embodiments of this application. That the PPDU shown in this embodiment of this application includes a pilot subcarrier and a data subcarrier may also be referred to as that the high frequency channel includes a pilot subcarrier and a data subcarrier. In actual application, in terms of time domain, the PPDU may include an STF field, an LTF field, a SIG field, a DATA field, and the like. Each field may include a plurality of OFDM symbols, and each OFDM symbol may include 64, 256, 512, or 1024 subcarriers (only an example) in terms of frequency domain, for example, a pilot subcarrier and a data subcarrier are included. For example, in frequency domain, each OFDM symbol included in the PPDU may include a pilot subcarrier, a data subcarrier, a direct current subcarrier, and a guard subcarrier. In time domain, each PPDU may include a plurality of OFDM symbols.

Generally, a signal modulus value of the pilot subcarrier is equal to a signal modulus value of the data subcarrier. However, for a high frequency signal, due to impact of a channel environment, interference strength, and the like on the high frequency signal, pilot energy is insufficient, resulting in a high packet error rate. Therefore, the signal modulus value of the pilot subcarrier is greater than the signal modulus value of the data subcarrier. When a total power remains unchanged, a transmit power of a signal carried on the pilot subcarrier can be effectively increased, energy of the pilot subcarrier can be increased, and a packet error rate can be reduced.

Based on the PPDU shown in step 201, for example, a signal modulus value of the pilot subcarrier in each of the plurality of OFDM symbols included in the PPDU may be greater than a signal modulus value of the data subcarrier. For another example, signal modulus values of pilot subcarriers in some of the plurality of OFDM symbols included in the PPDU may be greater than signal modulus values of data subcarriers, and signal modulus values of pilot subcarriers in some other OFDM symbols in the plurality of OFDM symbols included in the PPDU may be equal to signal modulus values of data subcarriers. For example, a signal modulus value of the pilot subcarrier in the OFDM symbol occupied by the LTF field in the PPDU is greater than a signal modulus value of the data subcarrier. Generally, one field in the PPDU may include a plurality of OFDM symbols, and signal modulus values of pilot subcarriers in some of the plurality of OFDM symbols may be greater than signal modulus values of data subcarriers; or signal modulus values of pilot subcarriers of all of the plurality of OFDM symbols are equal to signal modulus values of data subcarriers.

For example, a signal modulus value of the pilot subcarrier is $\sqrt{2}$, and a signal modulus value of the data subcarrier is 1.

For example, a pilot value of the pilot subcarrier may be $+\sqrt{2}$ or $-\sqrt{2}$; or the pilot value of the pilot subcarrier is at least one of the following: 1 + 1i, 1 - 1i, -1 + 1i, or -1 - 1i.

In an example, when a DFT size of the PPDU is 64, the index value of the pilot subcarrier includes [-21, -7, 7, 21].

In another example, when the DFT size of the PPDU is 256, the index value of the pilot subcarrier includes [-116, -90, -48, -22, 22, 48, 90, 116] or [-103, -75, -39, -11, 11, 39, 75, 103].

In still another example, when the DFT size of the PPDU is 128, the index value of the pilot subcarrier includes [-53, -25, -11, 11, 25, 53].

In still another example, when the DFT size of the PPDU is 512, the index value of the pilot subcarrier includes [-238, -212, -170, -144, -104, -78, -36, -10, 10, 36, 78, 104, 144, 170, 212, 238] or [-231, -203, -167, -139, -117, -89, -53, -25, 25, 53, 89, 117, 139, 167, 203, 231].

In still another example, when the DFT size of the PPDU is 1024, the index value of the pilot subcarrier includes [-468, -400, -334, -266, -226, -158, -92, -24, 24, 92, 158, 226, 266, 334, 400, 468] or [-468, -400, -334, -266, -220, -152, -86, -18, 18, 86, 152, 220, 266, 334, 400, 468].

203: The second communication apparatus processes the PPDU based on the index value of the pilot subcarrier.

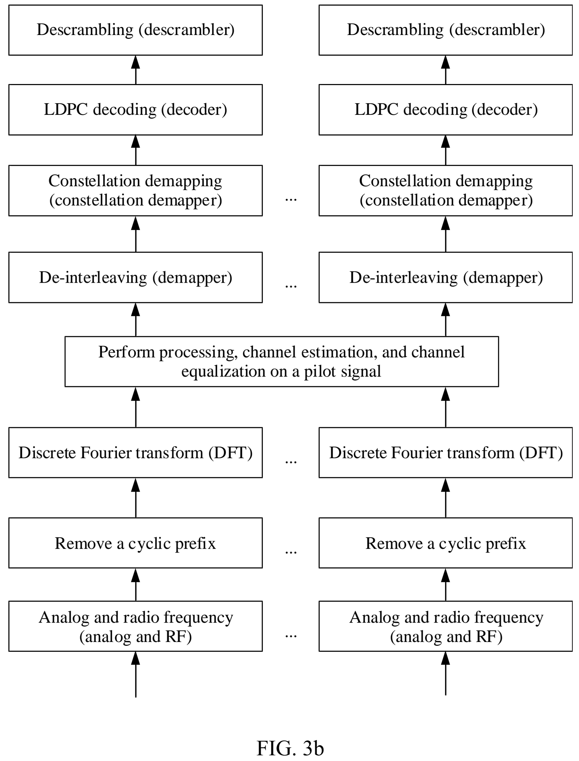

A process in which the first communication apparatus generates the PPDU may be understood as that the first communication apparatus processes information about a signal source, so that the information about the signal source becomes a signal suitable for transmission. Correspondingly, a process in which the second communication apparatus processes the PPDU may be understood as extracting the information about the signal source from a received signal. Therefore, for a process in which the second communication apparatus processes the PPDU, refer to a process in which the first communication apparatus generates the PPDU. For example, steps in which the second communication apparatus processes the PPDU may include: The second communication apparatus obtains a pilot signal in the PPDU based on an index value of the pilot subcarrier, and then processes the pilot signal. For example, the second communication apparatus may perform phase offset estimation and/or compensation based on the pilot signal. For another example, the second communication apparatus may perform frequency offset estimation and/or compensation based on the pilot signal. Therefore, the second communication apparatus can correct a phase offset of the data subcarrier. This improves demodulation accuracy. In an example, for a process in which the second communication apparatus processes the PPDU, refer to the following method shown in FIG. 3b.

Certainly, the second communication apparatus may further perform channel estimation, channel equalization, synchronization, and the like based on the PPDU. Details are not described herein. It should be understood that this embodiment of this application mainly relates to index values of the pilot subcarrier, the data subcarrier, and the like that are used when a PPDU is generated. For a frame structure of the PPDU, refer to a related standard or protocol. Details are not described in embodiments of this application.

In this embodiment of this application, a modulus value of a signal carried on the pilot subcarrier is increased, to effectively avoid a problem of insufficient pilot energy, and increase pilot energy. In this way, when the second communication apparatus processes a pilot, accuracy of correcting a frequency offset and/or a phase offset by the second communication apparatus can be improved, and demodulation accuracy of the second communication apparatus is improved.

The following describes in detail a process in which the first communication apparatus generates a PPDU and a process in which the second communication apparatus processes the PPDU.

FIG. 3a is a diagram of a process in which a first communication apparatus generates a PPDU according to an embodiment of this application. As shown in FIG. 3a, the process in which the first communication apparatus generates the PPDU may be as follows.

An information bit may undergo scrambling (or a scrambler shown in FIG. 3a), LDPC encoding (or an encoder shown in FIG. 3a), stream parsing (or a stream parser shown in FIG. 3a), constellation mapping (or a constellation mapper shown in FIG. 3a), LDPC tone mapping (or the LDPC tone mapper shown in FIG. 3a), stream cyclic shift (CSD per SS), and spatial and frequency mapping, a frequency domain signal is formed. Then, a time domain signal is formed through IDFT, and an OFDM symbol is formed by inserting a cyclic prefix and windowing (insertGI and window), and then is sent by using an analog and radio frequency (analog and RF) circuit. A plurality of OFDM symbols form the PPDU. Optionally, before forward error correction (forward error correction, FEC) coding (pre-FEC shown in FIG. 3a), the first communication apparatus may further perform PHY padding (padding). Optionally, after FEC (post-FEC shown in FIG. 3a), the first communication apparatus may further perform PHY padding.

For example, the first communication apparatus may perform spatial and frequency mapping based on the index value of the pilot subcarrier and the index value of the data subcarrier.

FIG. 3b is a diagram of a process in which a second communication apparatus processes a PPDU according to an embodiment of this application. As shown in FIG. 3b, the process in which the second communication apparatus processes the PPDU may be as follows.

For each OFDM symbol in the PPDU, a signal may be first received by using an analog circuit and a radio frequency circuit. After the signal is converted into a digital baseband signal, a cyclic prefix is removed, a frequency domain signal is obtained through DFT, then a phase offset and/or a frequency offset are/is corrected by processing a pilot signal, and channel impact is removed through channel estimation and equalization. Finally, source information bits are recovered through operations such as de-interleaving (or demapper shown in FIG. 3b), constellation point demapping (which may also be referred to as constellation demapping or constellation demapper shown in FIG. 3b), channel decoding (LDPC decoding or decoder shown in FIG. 3b), and descrambling (or descrambler shown in FIG. 3b).

It should be understood that the processes shown in FIG. 3a and FIG. 3b are merely examples. The first communication apparatus may further include more or fewer steps in the steps of generating the PPDU, and the second communication apparatus may further include more or fewer steps in the steps of processing the PPDU. This is not limited in embodiments of this application.

In specific implementation, when a protocol relates to a pilot subcarrier of a high frequency signal, a manner shown in FIG. 2 may be used as an example to directly specify an index value and a subcarrier spacing of a pilot subcarrier of a high frequency signal. Alternatively, the pilot subcarrier may be described by using a relative relationship between a high frequency signal and a low frequency signal. For example, the pilot subcarrier is obtained through mapping of the pilot subcarrier in a low frequency channel to a high frequency channel. For another example, a subcarrier spacing on the high frequency channel is M times a subcarrier spacing on the low frequency channel, where M is an integer. For another example, the subcarrier spacing on the high frequency channel is N times 312.5 kHz or 78.125 kHz (namely, the subcarrier spacing on the low frequency channel), where N is an integer. For example, a value of M may be 8, 12, 16, 20, 32, 64, or the like. For example, a value of N may be 8, 16, 32, 64, or the like. Values of M and N are not listed one by one in embodiments of this application. 312.5 kHz and 78.125 kHz listed above are merely instances. In specific implementation, more subcarrier spacings may be further used, and are not listed one by one in embodiments of this application.

In an example, the high frequency signal may be understood as follows. A subcarrier spacing of a low frequency signal is increased to obtain a high frequency signal (or referred to as obtaining a subcarrier spacing of a high frequency channel based on a subcarrier spacing of a low frequency channel), the subcarrier spacing of the high frequency signal is increased, and a signal bandwidth of the high frequency signal also increases. For a specific value of the subcarrier spacing of the low frequency signal, refer to a related protocol. Details are not described in this embodiment of this application. In another example, the high frequency signal may be understood as follows. 312.5 kHz is increased by eight times to obtain a subcarrier spacing of a high frequency channel, and then the high frequency signal is obtained based on the subcarrier spacing of the high frequency channel. Alternatively, 78.125 kHz is increased by eight times to obtain a subcarrier spacing of a high frequency channel, and then the high frequency signal is obtained based on the subcarrier spacing of the high frequency channel.

Alternatively, 312.5 kHz is increased by 16 times to obtain a subcarrier spacing of a high frequency channel, and then the high frequency signal is obtained based on the subcarrier spacing of the high frequency channel. A relationship between the high frequency signal, the subcarrier spacing of the high frequency channel, and 312.5 kHz (or 78.125 kHz, or the like) may be further described in another manner, and details are not listed one by one.

The signal bandwidth refers to a sampling rate of a signal, and may be determined by a sampling clock of a baseband. In a low frequency band protocol, a signal bandwidth may be equal to a channel bandwidth. In a high frequency band protocol, the signal bandwidth may also be equal to the channel bandwidth. The channel bandwidth may be understood as a difference between an upper frequency limit and a lower frequency limit of a signal that is allowed to pass through. In this embodiment of this application, a bandwidth of the high frequency channel may include at least one of the following: 160 MHz, 320 MHz, 640 MHz, 1280 MHz or 2560 MHz. The bandwidth of the high frequency channel shown herein may be understood as the channel bandwidth shown in this embodiment of this application.

In this embodiment of this application, a manner in which the first communication apparatus generates the high frequency signal may be the same as a manner in which the first communication apparatus generates the low frequency signal, for example, a high frequency signal is generated by using an index value of a pilot subcarrier related to the low frequency signal, or by using an index value of a pilot subcarrier and an index value of a data subcarrier that are related to the low frequency signal, and a subcarrier spacing of a high frequency channel. Therefore, a data signal processing process of the high frequency signal is approximately consistent with a data signal processing process of the low frequency signal. For a next-generation WLAN protocol that supports both a high frequency band and a low frequency band, chip design and implementation will be very friendly. The following uses an example to describe a mapping manner between a low frequency signal and a high frequency signal.

The following uses an example to describe an index value of a subcarrier on a high frequency channel and a bandwidth of the high frequency channel.

For example, a subcarrier spacing of a low frequency channel is 312.5 kHz, a DFT size is 64, and a bandwidth of the low frequency channel is 312.5 kHz*64=20 MHz. When N=8, a subcarrier spacing of the high frequency channel may be 312.5 kHz*8=2.5 MHz, and the bandwidth of the high frequency channel is 2.5 MHz*64=160 MHz; or when N=16, the subcarrier spacing of the high frequency channel may be 312.5 kHz*16=5 MHz, the bandwidth of the high frequency channel is 5 MHz*64=320 MHz, and an index value of a pilot subcarrier may include [-21, -7, 7, 21]. For example, 20 MHz may be a channel bandwidth defined in the 802.11ac/802.11n protocol. For another example, a subcarrier range like a data subcarrier range and a pilot subcarrier range of the PPDU may be [-28:-1, 1:28], where [-28:-1] may indicate that index values are -28, -27, ..., and -1, and [1:28] may indicate that index values are 1, 2, 3, 4, ..., 27, and 28. An index value of a data subcarrier of a PPDU may be an index value other than the index value of the pilot subcarrier in the foregoing range. The description of colons in parentheses is applicable to the following sections.

For another example, the subcarrier spacing of the low frequency channel is 312.5 kHz, the DFT size is 128, and the bandwidth of the low frequency channel is 312.5 kHz*128=40 MHz. When N=8, the subcarrier spacing of the high frequency channel may be 312.5 kHz*8=2.5 MHz, and the bandwidth of the high frequency channel is 2.5 MHz*128=320 MHz; or when N=16, the subcarrier spacing of the high frequency channel may be 312.5 kHz*16=5 MHz, the bandwidth of the high frequency channel is 5 MHz*128=640 MHz, and the index value of the pilot subcarrier may include [-53, -25, -11, 11, 25, 53]. For example, 40 MHz may be a channel bandwidth defined in the 802.11ac/802.11n protocol. For another example, a subcarrier range like a data subcarrier range and a pilot subcarrier range of the PPDU may be [-58:-2, 2:58]. The index value of the data subcarrier of the PPDU may be an index value other than the index value of the pilot subcarrier in the foregoing range.

For another example, the subcarrier spacing of the low frequency channel is 312.5 kHz, the DFT size is 256, and the bandwidth of the low frequency channel is 312.5 kHz*256=80 MHz. When N=8, the subcarrier spacing of the high frequency channel may be 312.5 kHz*8=2.5 MHz, and the bandwidth of the high frequency channel is 2.5 MHz*256=640 MHz; or when N=16, the subcarrier spacing of the high frequency channel may be 312.5 kHz*16=5 MHz, the bandwidth of the high frequency channel is 5 MHz*256=1280 MHz, and the index value of the pilot subcarrier may include [-103, -75, -39, -11, 11, 39, 75, 103]. For example, 80 MHz may be a channel bandwidth defined in the 802.11ac protocol. For another example, a subcarrier range like a data subcarrier range and a pilot subcarrier range of the PPDU may be [-122:-2, 2:122]. The index value of the data subcarrier of the PPDU may be an index value other than the index value of the pilot subcarrier in the foregoing range.

For another example, the subcarrier spacing of the low frequency channel is 78.125 kHz, the DFT size is 256, and the bandwidth of the low frequency channel is 78.125 kHz*256=20 MHz. When N=32, the subcarrier spacing of the high frequency channel is 78.125 kHz*32=2.5 MHz, and the bandwidth of the high frequency channel is 2.5 MHz*256=640 MHz; or when N=64, the subcarrier spacing of the high frequency channel is 78.125 kHz*64=5 MHz, the bandwidth of the high frequency channel is 5 MHz*256=1280 MHz, and the index value of the pilot subcarrier may include [-116, -90, -48, -22, 22, 48, 90, 116]. For example, 20 MHz may be a channel bandwidth defined in the 802.11ax protocol. For another example, a subcarrier range of the PPDU like a data subcarrier range and a pilot subcarrier range may be [-122:-2, 2:122], and an index value of a data subcarrier in the PPDU may be an index value other than the index value of the pilot subcarrier in the foregoing range.

For another example, the subcarrier spacing of the low frequency channel is 312.5 kHz, the DFT size is 512, and the bandwidth of the low frequency channel is 312.5 kHz*512=160 MHz. When N=8, the subcarrier spacing of the high frequency channel may be 312.5 kHz*8=2.5 MHz, and the bandwidth of the high frequency channel is 2.5 MHz*512=1280 MHz; or when N=16, the subcarrier spacing of the high frequency channel may be 312.5 kHz*16=5 MHz, the bandwidth of the high frequency channel is 5 MHz*512=2560 MHz, and the index value of the pilot subcarrier may include [-231, -203, -167, -139, -117, -89, -53, -25, 25, 53, 89, 117, 139, 167, 203, 231]. For example, 160 MHz may be a channel bandwidth defined in the 802.11ac protocol. For another example, a subcarrier range like a data subcarrier range and a pilot subcarrier range of the PPDU may be [-250:-130, -126:-6, 6:126, 130:250]. The index value of the data subcarrier in the PPDU may be an index value other than the index value of the pilot subcarrier in the foregoing range.

For another example, the subcarrier spacing of the low frequency channel is 78.125 kHz, the DFT size is 512, and the bandwidth of the low frequency channel is 78.125 kHz*512=40 MHz. When N=32, the subcarrier spacing of the high frequency channel may be 78.125 kHz Hz*32=2.5 MHz, and the bandwidth of the high frequency channel is 2.5 MHz*512=1280 MHz; or when N=64, the subcarrier spacing of the high frequency channel is 78.125 kHz*64=5 MHz, the bandwidth of the high frequency channel is 5 MHz*512=2560 MHz, and the index value of the pilot subcarrier may include [-238, -212, -170, -144, -104, -78, -36, -10, 10, 36, 78, 104, 144, 170, 212, 238]. For example, 40 MHz may be a channel bandwidth defined in the 802.11ax protocol. For another example, a subcarrier range like a data subcarrier range and a pilot subcarrier range of the PPDU may be [-244:-3, 3:244]. The index value of the data subcarrier in the PPDU may be an index value other than the index value of the pilot subcarrier in the foregoing range.

For another example, the subcarrier spacing of the low frequency channel is 78.125 kHz, the DFT size is 1024, and the bandwidth of the low frequency channel is 78.125 kHz*1024=80 MHz. When N=32, the subcarrier spacing of the high frequency channel may be 78.125 kHz*32=5 MHz, the bandwidth of the high frequency channel is 5 MHz*1024=5120 MHz, and the index value of the pilot subcarrier may include [-468, -400, -334, -266, -226, -158, -92, -24, 24, 92, 158, 226, 266, 334, 400, 468] or [-468, -400, -334, -266, -220, -152, -86, -18, 18, 86, 152, 220, 266, 334, 400, 468]. For example, 80 MHz may be a channel bandwidth defined in the 802.11ax/802.11be protocol. For another example, a subcarrier range like a data subcarrier range and a pilot subcarrier range of the PPDU may be [-500:-3, 3:500]. The index value of the data subcarrier in the PPDU may be an index value other than the index value of the pilot subcarrier in the foregoing range.

For related descriptions of a signal modulus value and a pilot value of the pilot subcarrier, refer to FIG. 2. Details are not described herein again. It may be understood that the foregoing value of N and the value of the subcarrier spacing of the low frequency channel are merely examples. In specific implementation, N may alternatively be another value, and the subcarrier spacing may alternatively be another value. Examples are not listed one by one in embodiments of this application.

FIG. 4 is a diagram of a simulation result according to an embodiment of this application. In the simulation diagram shown in FIG. 4, a horizontal coordinate represents a received signal-to-noise ratio, and a vertical coordinate represents a packet error rate. For an LTF and a data field signal that are transmitted on a 45 G/60 G millimeter wave band by increasing a carrier spacing of a 802.11n/802.11ac/802.11ax/802.11be signal, the solution provided in embodiments of this application significantly reduces a packet error rate of the LTF and the data field signal. As shown in FIG. 4, an example in which an 802.11ac signal with a bandwidth of 80 M is transmitted in a millimeter-wave band by increasing a carrier spacing by 16 times is used. On a premise that a total transmit power remains unchanged, a pilot value is set to $+\sqrt{2}/-\sqrt{2}$, and a packet error rate of 1% is considered. It can be learned from FIG. 4 that a received signal-to-noise ratio in the solution provided in this embodiment of this application is increased by 0.7 dB. The LTF and the data field shown herein are merely examples. Embodiments of this application are also applicable to a field other than the LTF and the data field in the PPDU.

Communication apparatuses provided in embodiments of this application are described below.

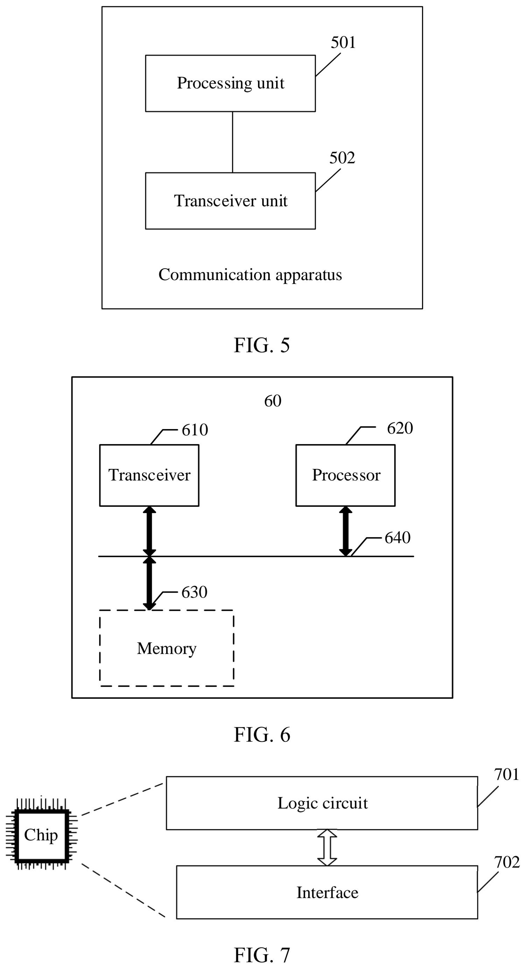

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The following describes in detail communication apparatuses in embodiments of this application with reference to FIG. 5 to FIG. 7.

FIG. 5 is a diagram of a structure of a communication apparatus according to an embodiment of this application. As shown in FIG. 5, the communication apparatus includes a processing unit 501 and a transceiver unit 502.

In some embodiments of this application, the communication apparatus may be the first communication apparatus or the chip shown above, and the chip may be disposed in the first communication apparatus. In other words, the communication apparatus may be configured to perform the steps or functions performed by the first communication apparatus in the foregoing method embodiments.

The processing unit 501 is configured to generate a PPDU. The transceiver unit 502 is configured to send or output the PPDU.

It may be understood that the detailed descriptions of the transceiver unit and the processing unit shown in this embodiment of this application are merely examples. For specific functions, steps, or the like performed by the transceiver unit and the processing unit, refer to the foregoing method embodiments. Details are not described herein again. For example, the processing unit 501 may be configured to perform step 201 shown in FIG. 2. The transceiver unit 502 may be configured to perform the sending step in step 202 shown in FIG. 2.

FIG. 5 is reused. In some other embodiments of this application, the communication apparatus may be the second communication apparatus or the chip shown above, and the chip may be disposed in the second communication apparatus. In other words, the communication apparatus may be configured to perform the steps or functions performed by the second communication apparatus in the foregoing method embodiments.

For example, the transceiver unit 502 is configured to receive or input a PPDU; and the processing unit 501 is configured to process the PPDU.

For example, the processing unit 501 is specifically configured to: obtain, on a pilot subcarrier corresponding to an index value of the pilot subcarrier, a pilot signal in the PPDU based on the index value of the pilot subcarrier; and perform processing based on the pilot signal. For another example, the processing unit 501 may be configured to perform at least one of the following: performing phase offset estimation and/or compensation based on a pilot signal; or performing frequency offset estimation and/or compensation based on a pilot signal.

It may be understood that the detailed descriptions of the transceiver unit and the processing unit shown in this embodiment of this application are merely examples. For specific functions, steps, or the like performed by the transceiver unit and the processing unit, refer to the foregoing method embodiments. Details are not described herein again. For example, the transceiver unit 502 may be further configured to perform the receiving step in step 202 shown in FIG. 2. The processing unit 501 may be further configured to perform step 203 shown in FIG. 2.

In the foregoing embodiments, for descriptions of the PPDU, the pilot subcarrier, and the like, refer to the descriptions in the foregoing method embodiments. Details are not described herein again.

It may be understood that the foregoing division manner is merely an example. A division manner of the first communication apparatus (or the chip disposed in the first communication apparatus) and the second communication apparatus (or the chip disposed in the second communication apparatus) may alternatively be as follows. The first communication apparatus may include a generation unit and a sending unit. The second communication apparatus may include a receiving unit and a processing unit. The processing unit may include at least one of a pilot subunit, a channel estimation subunit, a time synchronization subunit, or the like. Examples are not listed one by one herein. Optionally, the first communication apparatus and the second communication apparatus shown above may further include a storage unit. The storage unit may be configured to store the index value shown above. Alternatively, the storage unit may be configured to store at least one of the following: an index value of a pilot subcarrier, an index value of a guard subcarrier, or an index value of a data subcarrier.

The foregoing describes the first communication apparatus and the second communication apparatus in embodiments of this application. The following describes possible product forms of the first communication apparatus and the second communication apparatus. It should be understood that any form of product that has a function of the first communication apparatus in FIG. 5 or any form of product that has a function of the second communication apparatus in FIG. 5 falls within the protection scope of embodiments of this application. It should be further understood that the following description is merely an example, and the product forms of the first communication apparatus and the second communication apparatus in embodiments of this application are not limited thereto.

In a possible implementation, in the communication apparatus shown in FIG. 5, the processing unit 501 may be one or more processors. The transceiver unit 502 may be a transceiver, or the transceiver unit 502 may be a sending unit and a receiving unit. The sending unit may be a transmitter machine, the receiving unit may be a receiver machine, and the sending unit and the receiving unit are integrated into one device, for example, a transceiver. In this embodiment of this application, the processor and the transceiver may be coupled, or the like. A manner of connection between the processor and the transceiver is not limited in this embodiment of this application. In a process of performing the foregoing method, a process of sending information in the foregoing method may be understood as a process of outputting the information by the processor. When outputting the information, the processor outputs the information to transceiver, so that the transceiver transmits the information. After the information is outputted by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information into the processor. Further, after the transceiver receives the information, other processing may need to be performed on the information before processed information is input into the processor.

As shown in FIG. 6, a communication apparatus 60 includes one or more processors 620 and a transceiver 610.

For example, when the communication apparatus is configured to perform the steps, the methods, or the functions performed by the first communication apparatus, the processor 620 is configured to generate a PPDU; and the transceiver 610 is configured to send the PPDU.

For example, when the communication apparatus is configured to perform the steps, the methods, or the functions performed by the second communication apparatus, the transceiver 610 is configured to receive a PPDU from the first communication apparatus. The processor 620 is configured to perform processing based on M sequences included in the PPDU.

In this embodiment of this application, for descriptions of the PPDU, the pilot subcarrier, and the like, refer to the descriptions in the foregoing method embodiments. Details are not described herein again.

It may be understood that for specific descriptions of the processor and the transceiver, refer to descriptions of the processing unit and the transceiver unit shown in FIG. 5. Details are not described herein again.

In each implementation of the communication apparatus shown in FIG. 6, the transceiver may include a receiver and a transmitter. The receiver is configured to perform a function (or an operation) of receiving, and the transmitter is configured to perform a function (or an operation) of transmitting. The transceiver is configured to communicate with another device/apparatus through a transmission medium.

Optionally, the communication apparatus 60 may further include one or more memories 630, configured to store program instructions, data, and/or the like. The memory 630 is coupled to the processor 620. The coupling in this embodiment of this application may be an indirect coupling or a communication connection between apparatuses, units, or modules in an electrical form, a mechanical form, or another form, and is used for information exchange between the apparatuses, the units, or the modules. The processor 620 may cooperate with the memory 630. The processor 620 may execute the program instructions stored in the memory 630. Optionally, at least one of the one or more memories may be included in the processor. For example, the memory may be configured to store the index values shown above. For example, the memory may be configured to store at least one of the following: an index value of a pilot subcarrier, an index value of a guard subcarrier, or an index value of a data subcarrier.

In embodiments of this application, a specific connection medium among the transceiver 610, the processor 620, and the memory 630 is not limited. In this embodiment of this application, the memory 630, the processor 620, and the transceiver 610 are connected by using a bus 640 in FIG. 6. The bus is represented by using a bold line in FIG. 6. A manner of a connection between other components is merely an example for description, and imposes no limitation. The bus may be classified into an address bus, a data bus, a control bus, and the like. For ease of representation, only one thick line is used to represent the bus in FIG. 6, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store the program instructions and/or the data.

For example, the processor 620 is mainly configured to: process a communication protocol and communication data, control the entire communication apparatus, execute a software program, and process data of the software program. The memory 630 is mainly configured to store the software program and the data. The transceiver 610 may include a control circuit and an antenna. The control circuit is mainly configured to: perform conversion between a baseband signal and a radio frequency signal, and process the radio frequency signal. The antenna is mainly configured to receive and transmit a radio frequency signal in a form of an electromagnetic wave. The input/output apparatus, like a touchscreen, a display, or a keyboard, is mainly configured to: receive data input by a user and output data to the user.

After the communication apparatus is powered on, the processor 620 may read a software program in the memory 630, interpret and execute instructions of the software program, and process data of the software program. When data needs to be sent in a wireless manner, after performing baseband processing on to-be-sent data, the processor 620 outputs a baseband signal to the radio frequency circuit. After performing radio frequency processing on the baseband signal, the radio frequency circuit sends a radio frequency signal through an antenna in a form of an electromagnetic wave. When data is sent to the communication apparatus, the radio frequency circuit receives the radio frequency signal through the antenna, converts the radio frequency signal into a baseband signal, and outputs the baseband signal to the processor 620. The processor 620 converts the baseband signal into data and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in this embodiment of this application may further have more components and the like than those in FIG. 6. This is not limited in this embodiment of this application. The methods performed by the processor and the transceiver are merely examples. For specific steps performed by the processor and the transceiver, refer to the methods described above.

In another possible implementation, in the communication apparatus shown in FIG. 5, the processing unit 501 may be one or more logic circuits, and the transceiver unit 502 may be an input/output interface, which is also referred to as a communication interface, an interface circuit, an interface, or the like. Alternatively, the transceiver unit 502 may be a sending unit and a receiving unit. The sending unit may be an output interface, and the receiving unit may be an input interface. Alternatively, the sending unit and the receiving unit are integrated into one unit, for example, an input/output interface. As shown in FIG. 7, the communication apparatus shown in FIG. 7 includes a logic circuit 701 and an interface 702. In other words, the processing unit 501 may be implemented through the logic circuit 701, and the transceiver unit 502 may be implemented through the interface 702. The logic circuit 701 may be a chip, a processing circuit, an integrated circuit, a system on chip (system on chip, SoC), or the like. The interface 702 may be a communication interface, an input/output interface, a pin, or the like. For example, FIG. 7 is an example in which the communication apparatus is a chip. The chip includes the logic circuit 701 and the interface 702.

In this embodiment of this application, the logic circuit and the interface may be further coupled to each other. A specific manner of connection between the logic circuit and the interface is not limited in this embodiment of this application.

For example, when the communication apparatus is configured to perform the method, the function, or the step performed by the first communication apparatus, the logic circuit 701 is configured to generate a PPDU. The interface 702 is configured to output the PPDU.

For example, when the communication apparatus is configured to perform the method, the function, or the step performed by the second communication apparatus, the interface 702 is configured to input a PPDU. The logic circuit 701 is configured to process the PPDU.

Optionally, the chip may further include a memory, and the memory may be configured to store the index value shown above. For example, the memory may be configured to store at least one of the following: an index value of a pilot subcarrier, an index value of a data subcarrier, or an index value of a guard subcarrier. Certainly, the memory may alternatively be disposed outside the chip. For example, the chip may obtain an index value from a memory connected to the chip.

It may be understood that the communication apparatus shown in this embodiment of this application may implement the methods provided in embodiments of this application in a form of hardware, or may implement the methods provided in embodiments of this application in a form of software. This is not limited in this embodiment of this application.

In this embodiment of this application, for descriptions of the PPDU, the pilot subcarrier, and the like, refer to the descriptions in the foregoing method embodiments. Details are not described herein again.

For specific implementations of the embodiments shown in FIG. 7, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of the foregoing embodiments (as shown in FIG. 2).

In addition, this application further provides a computer program. The computer program is used to implement operations and/or processing performed by the first communication apparatus in the method provided in this application.

This application further provides a computer program. The computer program is used to implement operations and/or processing performed by the second communication apparatus in the method provided in this application.

This application further provides a computer-readable storage medium. The computer-readable storage medium stores computer code. When the computer code is run on a computer, the computer is enabled to perform operations and/or processing performed by the first communication apparatus in the method provided in this application.

This application further provides a computer-readable storage medium, where the computer-readable storage medium stores computer code. When the computer code is executed on a computer, the computer is enabled to perform the operations and/or processing executed by the second communication apparatus in the method provided in this application.

This application further provides a computer program product. The computer program product includes computer code or a computer program. When the computer code or the computer program is run on a computer, operations and/or processing performed by the first communication apparatus in the method provided in this application are/is performed.

This application further provides a computer program product. The computer program product includes computer code or a computer program. When the computer code or the computer program is run on a computer, operations and/or processing performed by the second communication apparatus in the method provided in this application are/is performed.

In the several embodiments provided in this application, it should be understood that the disclosed system, apparatus, and method may be implemented in other manners. For example, the described apparatus embodiment is merely an example. For example, division of the unit is merely logical function division and may be other division in an actual implementation. For example, a plurality of units or components may be combined or integrated into another system, or some features may be ignored, or are not performed. In addition, the displayed or discussed mutual couplings or direct couplings or communication connections may be indirect coupling or communication connections through some interfaces, apparatuses, or units, or may be electrical, mechanical, or other forms of connections.

The units described as separate parts may or may not be physically separate, and parts displayed as units may or may not be physical units, may be located in one position, or may be distributed on a plurality of network units. Some or all of the units may be selected based on an actual requirement to implement the technical effects of the solutions provided in embodiments of this application.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method based on a physical layer protocol data unit PPDU, wherein the method comprises:

    generating the PPDU; and
    sending the PPDU, wherein the PPDU comprises a pilot subcarrier and a data subcarrier, a signal modulus value of the pilot subcarrier is greater than a signal modulus value of the data subcarrier, and the pilot subcarrier is used for phase tracking.

2. A communication method based on a physical layer protocol data unit PPDU, wherein the method comprises:

    receiving the PPDU, wherein the PPDU comprises a pilot subcarrier and a data subcarrier, a signal modulus value of the pilot subcarrier is greater than a signal modulus value of the data subcarrier, and the pilot subcarrier is used for phase tracking; and
    processing the PPDU based on an index value of the pilot subcarrier.

3. The method according to claim 1 or 2, wherein that the pilot subcarrier is used for phase tracking comprises at least one of the following: the pilot subcarrier is used for phase offset estimation; the pilot subcarrier is used for phase offset compensation;

the pilot subcarrier is used for frequency offset estimation; or the pilot subcarrier is used for frequency offset compensation.

4. The method according to any one of claims 1 to 3, wherein the signal modulus value of the pilot subcarrier is $\sqrt{2}$, and the signal modulus value of the data subcarrier is 1.

5. The method according to claim 4, wherein a pilot value of the pilot subcarrier is $+\sqrt{2}$ or $-\sqrt{2}$; or the pilot value of the pilot subcarrier is at least one of the following: 1 + 1i, 1 - 1i, -1+1i,or -1 - 1i.

6. The method according to any one of claims 1 to 5, wherein when a discrete Fourier transform DFT size of the PPDU is 64, the index value of the pilot subcarrier comprises [-21, -7, 7, 21]; or

    when the DFT size of the PPDU is 256, the index value of the pilot subcarrier comprises [-116, -90, -48, -22, 22, 48, 90, 116] or [-103, -75, -39, -11, 11, 39, 75, 103]; or
    when the DFT size of the PPDU is 128, the index value of the pilot subcarrier comprises [-53, -25, -11, 11, 25, 53]; or
    when the DFT size of the PPDU is 512, the index value of the pilot subcarrier comprises [-238, -212, -170, -144, -104, -78, -36, -10, 10, 36, 78, 104, 144, 170, 212, 238] or [-231, - 203, -167, -139, -117, -89, -53, -25, 25, 53, 89, 117, 139, 167, 203, 231]; or
    when the DFT size of the PPDU is 1024, the index value of the pilot subcarrier comprises [-468, -400, -334, -266, -226, -158, -92, -24, 24, 92, 158, 226, 266, 334, 400, 468] or [-468, - 400, -334, -266, -220, -152, -86, -18, 18, 86, 152, 220, 266, 334, 400, 468].

7. The method according to any one of claims 1 and 3 to 6, wherein sending the PPDU comprises:
sending the PPDU on a high frequency channel, wherein a subcarrier spacing on the high frequency channel is N times 312.5 kHz or 78.125 kHz, and N is an integer.

8. A communication apparatus, wherein the apparatus comprises:

    a processing unit, configured to generate a physical layer protocol data unit PPDU; and
    a transceiver unit, configured to send the PPDU, wherein the PPDU comprises a pilot subcarrier and a data subcarrier, a signal modulus value of the pilot subcarrier is greater than a signal modulus value of the data subcarrier, and the pilot subcarrier is used for phase tracking.

9. A communication apparatus, wherein the apparatus comprises:

   a transceiver unit, configured to receive a physical layer protocol data unit PPDU, wherein the PPDU comprises a pilot subcarrier and a data subcarrier, a signal modulus value of the pilot subcarrier is greater than a signal modulus value of the data subcarrier, and the pilot subcarrier is used for phase tracking; and
   a processing unit, configured to process the PPDU based on an index value of the pilot subcarrier.

10. The apparatus according to claim 8 or 9, wherein that the pilot subcarrier is used for phase tracking comprises at least one of the following: the pilot subcarrier is used for phase offset estimation; the pilot subcarrier is used for phase offset compensation; the pilot subcarrier is used for frequency offset estimation; or the pilot subcarrier is used for frequency offset compensation.

11. The apparatus according to any one of claims 8 to 10, wherein the signal modulus value of the pilot subcarrier is $\sqrt{2}$, and the signal modulus value of the data subcarrier is 1.

12. The apparatus according to claim 11, wherein a pilot value of the pilot subcarrier is $+\sqrt{2}$ or $-\sqrt{2}$; or the pilot value of the pilot subcarrier is at least one of the following: 1 + 1i, 1 - 1i, -1+1i,or -1 - 1i.

13. The apparatus according to any one of claims 8 to 12, wherein when a discrete Fourier transform DFT size of the PPDU is 64, the index value of the pilot subcarrier comprises [-21, -7, 7, 21]; or

   when the DFT size of the PPDU is 256, the index value of the pilot subcarrier comprises [-116, -90, -48, -22, 22, 48, 90, 116] or [-103, -75, -39, -11, 11, 39, 75, 103]; or
   when the DFT size of the PPDU is 128, the index value of the pilot subcarrier comprises [-53, -25, -11, 11, 25, 53]; or
   when the DFT size of the PPDU is 512, the index value of the pilot subcarrier comprises [-238, -212, -170, -144, -104, -78, -36, -10, 10, 36, 78, 104, 144, 170, 212, 238] or [-231, - 203, -167, -139, -117, -89, -53, -25, 25, 53, 89, 117, 139, 167, 203, 231]; or
   when the DFT size of the PPDU is 1024, the index value of the pilot subcarrier comprises [-468, -400, -334, -266, -226, -158, -92, -24, 24, 92, 158, 226, 266, 334, 400, 468] or [-468, - 400, -334, -266, -220, -152, -86, -18, 18, 86, 152, 220, 266, 334, 400, 468].

14. The apparatus according to any one of claims 8 and 10 to 13, wherein
the transceiver unit is specifically configured to send the PPDU on a high frequency channel, wherein a subcarrier spacing on the high frequency channel is N times 312.5 kHz or 78.125 kHz, and N is an integer.

15. A communication apparatus, comprising a processor and a memory, wherein

   the memory is configured to store instructions; and
   the processor is configured to execute the instructions, so that the method according to any one of claims 1 to 7 is performed.

16. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 7 is performed.

17. A computer-readable storage medium, wherein the computer-readable storage medium is used to store a computer program, and when the computer program is executed, the method according to any one of claims 1 to 7 is performed.

18. A computer program, wherein when the computer program is executed, the method according to any one of claims 1 to 7 is performed.

19. A communication system, wherein the communication system comprises a first communication apparatus and a second communication apparatus, the first communication apparatus is configured to perform the method according to any one of claims 1 and 3 to 7, and the second communication apparatus is configured to perform the method according to any one of claims 2 to 7.

FIG. 1

FIG. 2

Pre-FEC PHY padding (padding)

↓

Scrambling (scrambler)

↓

LDPC encoding (encoder)

↓

Post-FEC PHY padding (padding)

↓

Stream parsing (Stream parser)

| Constellation mapping (constellation mapper) | ... | Constellation mapping (constellation mapper) |

| LDPC tone mapping (LDPC tone mapper) | ... | LDPC tone mapping (LDPC tone mapper) |

| Stream cyclic shift (CSD per SS) | ... | Stream cyclic shift (CSD per SS) |

Space-time streams (spatial streams)

Spatial and frequency mapping (spatial and frequency mapping)

| Inverse discrete Fourier transform (IDFT) | ... | Inverse discrete Fourier transform (IDFT) |

| Cyclic prefix insertion and windowing (InsertGI and window) | ... | Cyclic prefix insertion and windowing (InsertGI and window) |

| Analog and radio frequency (analog and RF) | ... | Analog and radio frequency (analog and RF) |

Transmit chains (transmit chains)

FIG. 3a

```
┌─────────────────────────────┐          ┌─────────────────────────────┐
│ Descrambling (descrambler)  │          │ Descrambling (descrambler)  │
└─────────────────────────────┘          └─────────────────────────────┘
              ▲                                        ▲
┌─────────────────────────────┐          ┌─────────────────────────────┐
│ LDPC decoding (decoder)     │          │ LDPC decoding (decoder)     │
└─────────────────────────────┘          └─────────────────────────────┘
              ▲                                        ▲
┌─────────────────────────────┐          ┌─────────────────────────────┐
│ Constellation demapping     │   ···    │ Constellation demapping     │
│ (constellation demapper)    │          │ (constellation demapper)    │
└─────────────────────────────┘          └─────────────────────────────┘
              ▲                                        ▲
┌─────────────────────────────┐          ┌─────────────────────────────┐
│ De-interleaving (demapper)  │   ···    │ De-interleaving (demapper)  │
└─────────────────────────────┘          └─────────────────────────────┘
              ▲                                        ▲
       ┌───────────────────────────────────────────────────┐
       │ Perform processing, channel estimation, and channel│
       │      equalization on a pilot signal                │
       └───────────────────────────────────────────────────┘
              ▲                                        ▲
┌─────────────────────────────┐          ┌─────────────────────────────┐
│ Discrete Fourier transform  │   ···    │ Discrete Fourier transform  │
│ (DFT)                       │          │ (DFT)                       │
└─────────────────────────────┘          └─────────────────────────────┘
              ▲                                        ▲
┌─────────────────────────────┐          ┌─────────────────────────────┐
│ Remove a cyclic prefix      │   ···    │ Remove a cyclic prefix      │
└─────────────────────────────┘          └─────────────────────────────┘
              ▲                                        ▲
┌─────────────────────────────┐          ┌─────────────────────────────┐
│ Analog and radio frequency  │   ···    │ Analog and radio frequency  │
│ (analog and RF)             │          │ (analog and RF)             │
└─────────────────────────────┘          └─────────────────────────────┘
              ▲                                        ▲
```

FIG. 3b

EP 4 676 011 A1

EHT PPDU

| EHT-SIG common field | EHT-SIG user-specific field |
|---|---|

| L-STF | L-LTF | L-SIG | RL-SIG | U-SIG SYM 1 | U-SIG SYM 2 | EHT-SIG | EHT-STF | EHT-LTF | Data |
|---|---|---|---|---|---|---|---|---|---|

| Version independent field | Version dependent information field | Cyclic redundancy code | Tail |
|---|---|---|---|

FIG. 3c

| L-STF | L-LTF | L-SIG | RL-SIG | HE-SIG-A | HE-SIG-B | HE-STF | HE-LTF | ... | HE-LTF | DATA | PE |

Pre-HE modulation field        HE modulation field

FIG. 3d

FIG. 4

EP 4 676 011 A1

FIG. 5

FIG. 6

FIG. 7

## INTERNATIONAL SEARCH REPORT

| International application No. |
|---|
| **PCT/CN2024/081581** |

### A.   CLASSIFICATION OF SUBJECT MATTER

H04L69/323(2022.01)i

According to International Patent Classification (IPC) or to both national classification and IPC

### B.   FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXT, DWPI, IEEE: 物理层协议数据单元, 导频, 前导码, 数据, 子载波, 音调, 索引, 模值, 能量, 功率, 干扰, 值, WLAN, protocol, PPDU, pilot, preamble, data, subcarrier, tone, index, mod, value, power, SNR

### C.   DOCUMENTS CONSIDERED TO BE RELEVANT

| Category* | Citation of document, with indication, where appropriate, of the relevant passages | Relevant to claim No. |
|---|---|---|
| A | US 2021242998 A1 (LG ELECTRONICS INC.) 05 August 2021 (2021-08-05) description, paragraphs [0006]-[0021] and [0142]-[0390], and figures 3 and 12 | 1-19 |
| A | US 2022263611 A1 (HUAWEI TECHNOLOGIES CO., LTD.) 18 August 2022 (2022-08-18) entire document | 1-19 |
| A | US 2022416988 A1 (NXP USA, INC.) 29 December 2022 (2022-12-29) entire document | 1-19 |
| A | CN 115211071 A (QUALCOMM INC.) 18 October 2022 (2022-10-18) entire document | 1-19 |
| A | CHUN, Jinyoung et al. "TGbe CC36 Comment Resolutions for Pilot" *doc.: IEEE 802.11-16/0024r11134r1 . http://mentor.ieee.org/802.11/ dcn/21/11-21-1134-01-00be-cc36-cr- for-pilot.docx*, 31 July 2021 (2021-07-31), section 36.3.13.11 | 1-19 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 May 2024** | **27 May 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/081581**

| Patent document cited in search report | | | Publication date (day/month/year) | Patent family member(s) | | | Publication date (day/month/year) |
|---|---|---|---|---|---|---|---|
| US | 2021242998 | A1 | 05 August 2021 | WO | 2019240441 | A1 | 19 December 2019 |
| US | 2022263611 | A1 | 18 August 2022 | EP | 4024724 | A1 | 06 July 2022 |
| | | | | WO | 2021043111 | A1 | 11 March 2021 |
| | | | | CN | 112448803 | A | 05 March 2021 |
| US | 2022416988 | A1 | 29 December 2022 | | None | | |
| CN | 115211071 | A | 18 October 2022 | KR | 20220155274 | A | 22 November 2022 |
| | | | | EP | 4118781 | A1 | 18 January 2023 |
| | | | | US | 2021288768 | A1 | 16 September 2021 |
| | | | | TW | 202139642 | A | 16 October 2021 |
| | | | | WO | 2021183619 | A1 | 16 September 2021 |
| | | | | BR | 112022017955 | A2 | 18 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310320503